# NEW EUROPEAN PATENT SPECIFICATION

(11) **EP 3 306 766 B2**
(45) Date of publication and mention of the opposition decision: **03.04.2024**
(45) Mention of the grant of the patent: 07.07.2021
(21) Application number: 16803084.9
(22) Date of filing: 20.05.2016
(51) Int. Cl.: H02H 3/06, H02J 3/36, H02H 7/26

(54) **DIRECT CURRENT POWER TRANSMISSION SYSTEM, CENTRAL SERVER OF SAME, AND METHOD FOR RESTORING DIRECT CURRENT POWER TRANSMISSION PATHWAY AFTER FAILURE**
GLEICHSTROMÜBERTRAGUNGSSYSTEM, ZENTRALER SERVER DIESES SYSTEMS UND VERFAHREN ZUR WIEDERHERSTELLUNG EINES GLEICHSTROMÜBERTRAGUNGSWEGS NACH EINEM AUSFALL
SYSTÈME DE TRANSMISSION DE PUISSANCE EN COURANT CONTINU, SON SERVEUR CENTRAL ET PROCÉDÉ DE RÉTABLISSEMENT DE LA VOIE DE TRANSMISSION DE PUISSANCE EN COURANT CONTINU APRÈS UNE PANNE

(30) Priority: 29.05.2015 JP 2015110746
(43) Date of publication of application: 11.04.2018
(73) Proprietor: Kabushiki Kaisha Toshiba, Minato-ku, Tokyo 105-8001 (JP); Toshiba Energy Systems & Solutions Corporation, Saiwai-ku Kawasaki-shi Kanagawa 2120013 (JP)
(72) Inventor: KANAYA, Kazuhisa, Tokyo 105-8001 (JP); OHDA, Yoshiaki, Tokyo 105-8001 (JP); HASEGAWA, Ryuta, Tokyo 105-8001 (JP); NIWA, Yoshimitsu, Tokyo 105-8001 (JP); NAOI, Shinya, Tokyo 105-8001 (JP); WANG, Mian, Tokyo 105-8001 (JP); ANDO, Masayuki, Tokyo 105-8001 (JP)
(74) Representative: AWA Sweden AB
(86) International application number: PCT/JP2016/064998
(87) International publication number: WO 2016/194649

(56) References cited:
- WO-A1-2013/174726
- JP-A- 2002 101 555
- JP-A- 2008 072 852
- JP-A- 2012 055 033
- JP-A- 2014 235 834
- US-A1- 2013 286 521
- US-A1- 2015 116 876

## Description

### FIELD

Embodiments of the present disclosure relates to a technology for controlling the current break and flow in a DC power transmission path.

### BACKGROUND

In view of reduction of environmental load and diversification of power supplies, renewable energy, such as wind power generation and solar power generation, has been promoted. In addition, those power supplies have been increased in size, and for example, wind power generation on the ocean, and solar light or solar thermal power generation in desert areas has been put in practical use. Since ocean and desert are often geographically apart from urban areas that are power demanded locations, elongating the power transmission distance.

As for such long-distance power transmission, instead of AC power transmission systems generally applied, a high-voltage direct current (HVDC) is applied in some cases. When the HVDC to a long-distance and high-power transmission is applied, in comparison with conventional AC power transmission systems, a system that has less power transmission loss at low costs can be constructed.

When a fault, such as short-circuiting or earth fault occurs in a power transmission system, in order to protect the normal path from the adverse effects of voltage reduction and fault current increase, and to ensure the continuous operation, a fault interruption within a quite short time is necessary. Hence, the path for the DC power transmission system is divided by a DC circuit breaker, and the DC circuit breaker located at the end of the fault section involving a fault point disconnects the fault section.

In the case of AC, although a current break can be performed at a point where a current crosses a zero point per a half cycle of the frequency that is 50Hz or 60 Hz, in the case of the DC current, there is no point at which the current crosses the zero point. Hence, even if a contact of a switch provided in the system is simply disconnected, arc is produced between the contacts, causing the current to keep flowing.

Hence, various DC circuit breakers capable of breaking a DC current at fast speed have been proposed. For example, by applying a semiconductor circuit breaker including a semiconductor element with a self-extinguishing capability instead of a mechanical circuit breaker which has a metal contact and is generally applied in AC power transmission systems, a breaking of the DC current at a faster speed has been proposed. In addition, a hybrid-type DC circuit breaker device employing a structure in which the semiconductor circuit breaker is connected in parallel with the mechanical circuit breaker has been proposed.

Such hybrid-type DC circuit breaker device includes a commutation device for switching energizing paths. A commutation device includes, for example, an H-bridge circuit having multiple switching elements and a capacitor, and is connected in series relative to the semiconductor circuit breaker. In normal operation, the mechanical circuit breaker that has a little electrical resistance is energized to reduce the transmission loss. When a fault occurs, an output voltage is controlled using the H-bridge circuit of the commutation circuit, the current is guided in the parallel circuit, and the DC current is interrupted by the semiconductor circuit breaker.

### CITATION LIST

### PATENT LITERATURES

Patent Document 1: WO 2011/057675 A
Patent Document 2: WO 2013/131582 A
Patent Document 3: WO 2014/048716 A
Patent Document 4: JP 2014-235834 A

In US2013286521, systems and methods for detecting and handling faults in a DC bus system ("system") can comprise detecting a fault in the segment, isolating the segment from the system, waiting for a period of time, connecting a probe power unit to the system at the isolated segment, and determining if a fault still exists on the isolated segment, wherein the determining is based on whether power is discharging from the probe power unit when connected to the system. The system can comprise one or more controllers and a probe power unit.

In JP2014235834, a DC current breaking device cuts off a fault point in a power transmission line of a DC power transmission network at a high speed. The device comprises: a mechanical circuit breaker having a mechanical contact, and arranged in a normal operation time current path having a predetermined insulation withstanding voltage in a state that the mechanical contact is cut off; a semiconductor circuit breaker in which two switching elements having a self arc-extinguishing capability are connected in series; and an H-shape bridge unit group in which one or two or more H-shape bridge units are connected in series, each H-shape bridge unit being configured by parallel-connecting two legs and a capacitor, each leg being configured by series-connecting two switching elements having the self arc-extinguishing capability. The semiconductor circuit breaker and the H-type bridge unit group are connected in series, and arranged in a fault time current path connected in parallel to the mechanical circuit breaker.

### SUMMARY

Recovery of the section where the fault has been removed is also a concern like the breaking of the fault current. Recovery should be made promptly, safely, and surely. When the fault section is returned to the system although the fault is still occurring therein, excessive energy flows into the fault section, which is likely to damage the power transmission line constructing the fault section and the devices like a converter. In addition, when the fault section is returned to the system although the fault is still continuing, an excessive current that cannot be broken again flows into the DC circuit breaker, disabling a disconnection of the fault section in some cases.

The fault section may be returned to the system by setting a sufficient time period at which the fault is removed with high probability, but the fault has been already removed in some cases, resulting in a disadvantage in view of swiftness.

The present invention, as defined by claims 1, 11 and 12, has been made in view of the foregoing technical problems, and an objective is to provide a DC power transmission system, a recovery method thereof, and a central server provided in a system which are capable of, when a fault occurs in a DC power transmission path, promptly, safely, and surely recovering a section where the fault has been removed.

### BRIEF DESCRIPTION OF DRAWINGS

FIG. 1 is a diagram illustrating a structure of a DC power transmission system according to an embodiment;
FIG. 2 is a diagram illustrating a structure of a protective relay of the DC power transmission system according to the embodiment;
FIG. 3 is a diagram illustrating a structure of a central server of the DC power transmission system according to the embodiment;
FIG. 4 is a flowchart illustrating an action of the DC power transmission system from an occurrence of a fault to a recovery according to the embodiment;
FIG. 5 is a diagram illustrating a structure of a switch of the DC power transmission system according to the embodiment;
FIG. 6 is a diagram illustrating an H-bridge circuit of a commutation device in the switch of the DC power transmission system according to the embodiment;
FIG. 7 is a time chart of the DC power transmission system from the occurrence of a fault to the recovery according to the embodiment;
FIG. 8 is a diagram illustrating another example 1 of a path of the DC power transmission system according to the embodiment;
FIG. 9 is a diagram illustrating another example 2 of a path of the DC power transmission system not falling under the scope of the patent;
FIG. 10 is a diagram illustrating another example 3 of a path of the DC power transmission system according to the embodiment;
FIG. 11 is a diagram illustrating another example 4 of a path of the DC power transmission system according to the embodiment;
FIG. 12 is a diagram illustrating another example 5 of a path of the DC power transmission system not falling under the scope of the patent;
FIG. 13 is a diagram illustrating another example 6 of a path of the DC power transmission system according to the embodiment;
FIG. 14 is a diagram illustrating another example 1 of a switch of the DC power transmission system according to the embodiment;
FIG. 15 is a diagram illustrating another example 2 of a switch of the DC power transmission system according to the embodiment;
FIG. 16 is a diagram illustrating another example 3 of a switch of the DC power transmission system according to the embodiment;
FIG. 17 is a diagram illustrating another example 4 of a switch of the DC power transmission system according to the embodiment;
FIG. 18 is a diagram illustrating another example 5 of a switch of the DC power transmission system according to the embodiment;
FIG. 19 is a diagram illustrating another example 6 of a switch of the DC power transmission system according to the embodiment; and
FIG. 20 is a diagram illustrating another example of a commutation device of the DC power transmission system according to the embodiment.

### DETAILED DESCRIPTION

A DC power transmission system according to an embodiment will be described below with reference to the accompanying figures.

### (Structure)

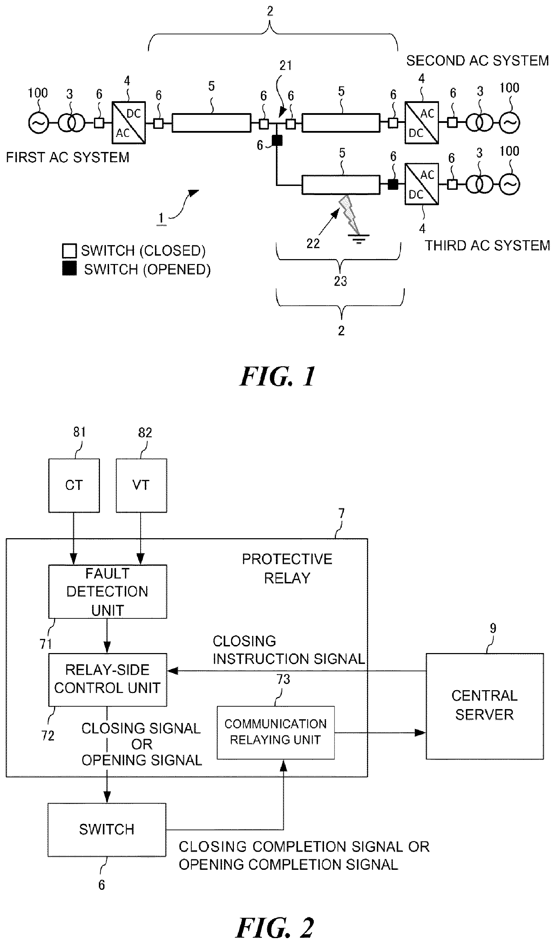

As illustrated in FIG. 1, a DC power transmission system 1 is provided between AC systems 100. The DC power transmission system 1 performs DC power transmission from the one AC system 100 to the other AC system 100. A path 2 of the DC power transmission system 1 is diverged or converged, and the DC power transmission system 1 is capable of transmitting power from the one AC system 100 to the multiple AC system 100, or from the multiple AC system 100 to the AC system 100 by DC current. That is, the DC power transmission system 1 includes a diverged point or a converged point in the path 2. The diverged point or the converged point will be simply referred to branch point 21.

The DC power transmission system 1 includes a transformer 3 and a converter 4 at the connection location to the AC system 100. The transformers 3 mutually transforms the voltage of the converter 4 and the voltage of the AC system 100. The converter 4 mutually converts AC and DC. A power transmission line 5 is wired between the converters 4. The path 2 is divided section by section by a switch 6 placed therebetween. In other words, the section is a range between the switches 6.

For example, the switch 6 is provided at the terminal between the transformer 3 and the converter 4. In addition, for example, the power transmission line 5 is divided into multiple sections, and each terminal of the power transmission line 5 is connected via the switch 6. The DC power transmission system 1 has the switches 6 so as to divide the transformer 3, the converter 4, and the power transmission line 5 into each optional section. The switch 6 is a circuit breaker having a capability to break and flow a current. The switch 6 between the transformer 3 and the converter 4 is an AC circuit breaker, while the switch 6 provided at each terminal of the power transmission line 5 is a DC circuit breaker.

An example DC power transmission system will be described. As illustrated in FIG. 1, the DC power transmission system 1 connects the three AC systems 100. The path 2 is formed by the power transmission line 5 between a first AC system 100 and the second AC system 100, and the branch point 21 is provided in the intermediate location of the path 2. Another path 2 by the power transmission line 5 is formed from the branch point 21 to the third AC system 100. The power transmission line 5 between the first AC system 100 and the second AC system 100 is divided into two sections. The branch point 21 is provided between the sections of the power transmission line 5. The switches 6 are provided between each transformer 3 and each converter 4, between each converter 4 and the power transmission line 5, and between the power transmission line 5 and the branch point 21.

This DC power transmission system 1 includes a protective relay 7 for controlling the switch 6 so as to correspond to each switch 6. Each terminal is provided with a current transformer 81 (CT) and a voltage transformer 82 (VT) (see FIG. 2), and the terminal current value and the terminal voltage value is input to the protective relay 7 that is connected to the same terminal. In addition, the DC power transmission system 1 includes a central server 9 that integrally controls each protective relay 7. Each protective relay 7 and the central server 9 are connected together by a signal transmission path formed by wireless, wired, or a combination thereof.

The protective relay 7 is a so-called digital relay. The protective relay 7 detects a fault, opens the switch 6 against the presence of fault, and also closes the switch 6 in accordance with a received closing instruction signal from the central server 9. The central server 9 confirms whether the fault is still continued or has ended by causing the closing action of one of the switches 6 among the multiple switches 6 located at the end of a fault section 23 through the protective relay 7. In addition, the central server 9 returns, through the protective relay 7, all switches 6 located at the end of the fault section 23 to the close state, thereby recovering the fault section 23.

The fault section 23 is a section covering a fault point 22. The fault point 22 is a location where the short-circuiting or earth fault occurs due to reasons, such as lightning stoke or contact of foreign objects. The multiple switches 6 located at the end of the fault section 23 are the switches 6 that define the section covering the fault point 22. An opening action is a so-called trip due to an over-current, and is a disconnection of the circuit. A closing action is a connection of the disconnected circuit. The recovery of the fault section 23 is to connect the end of the section where the fault has ended to the normal section, thereby returning to the path 2.

FIG. 2 is a block diagram illustrating a structure of the protective relay 7. Each protective relay 7 is connected to the switch 6 that is connected to the same terminal, the current transformer 81 and the voltage transformer 82 of the same terminal. The protective relay 7 includes a fault detection unit 71 that detects a fault, a relay-side control unit 72 that controls the switch 6, and a communication relaying unit 73 that relays the status of the switch 6 to the central server 9.

The fault detection unit 71 receives the current value and the voltage value from the current transformer 81 and the voltage transformer 82. Next, the fault detection unit 71 detects a fault based on the received current value and voltage value. A fault in the section where the terminal connected to the protective relay 7 is detected. That is, when the fault point 22 occurs at a certain section, the protective relay 7 at the end of this section detects the fault.

For example, the fault detection unit 71 stores the current threshold for detecting an over-current caused by a fault, the current change threshold for detecting a keen current change caused by the fault, and the voltage change threshold for detecting a keen voltage change caused by the fault. The fault detection unit 71 calculates, from the current value and the voltage value, the current value, the current change value (di/dt), and the voltage change value (dv/dt), and determines the presence of the fault by a comparison with each threshold value.

In this case, the current threshold value for detecting the over-current caused by the fault is greater than the DC current flowing when there is no fault. In addition, as for the fault detection when one of the switches 6 among the multiple switches 6 located at the end of the fault section 23 is closed by the central server 9 via the protective relays 7, the upper limit of the charging current flowing through the section may be set to be the current threshold. This current threshold is smaller than the DC current flowing when there is no fault.

The current change threshold may be slower than the current change caused by the occurrence of fault, and may be keener than the current change caused when the charging current flows. The term slower indicates that the inclination of the current change is small, while the term keener indicates that the inclination of the current change is large.

The relay-side control unit 72 transmits a opening signal to the switch 6 in an ON state in response to an occurrence of fault and a continuation thereof by the fault detection unit 71, thereby causing the switch 6 connected to the same terminal as the protective relay 7 to perform opening action. In addition, the relay-side control unit 72 receives a closing instruction signal to the switch 6 from the central server 9 for confirming the fault continuation or the end thereof, thereby causing the switch 6 connected to the same terminal as the protective relay 7 to perform closing action.

The communication relaying unit 73 notifies the central server 9 of the opening or closing state of. That is, the communication relaying unit 73 receives an opening completion signal and closing completion signal from the switch 6, and relays the received signal to the central server 9. The switch 6 outputs, to the protective relay 7 connected to the same terminal as the switch 6, the opening completion signal when the opening action completes. In addition, the switch 6 outputs, to the protective relay 7 connected to the same terminal as the switch 6, the closing completion signal when the closing action completes. When relaying the signal to the central server 9, an identifier like an IP address to identify the protective relay 7 is added.

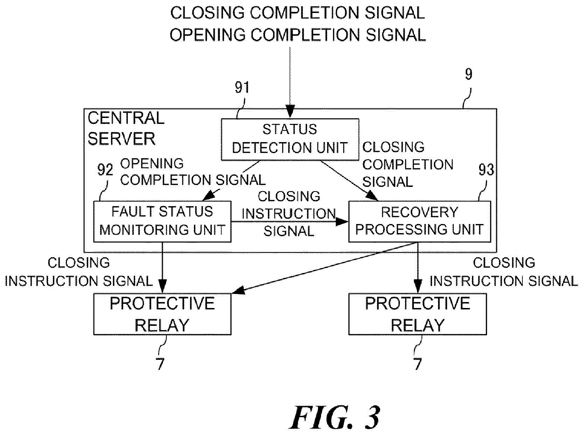

FIG. 3 is a block diagram illustrating the structure of the central server 9. The central server 9 is a so-called computer, and includes a communication interface with each protective relay 7, a processor, such as a CPU or an MPU, a ROM and a RAM. The central server 9 is a server-side control unit that controls the switch 6 via the protective relay 7 for confirming the fault continuation or the end thereof and for recovering the section. The central server 9 includes, by executing a program stored in the ROM, a status detection unit 91 that receives the closing completion signal and the opening completion signal via the protective relay 7, a fault status monitoring unit 92 that confirms the presence of a fault, and a recovery processing unit 93 that recovers the section where the fault has been removed.

The fault status monitoring unit 92 changes, when the fault section 23 is disconnected, only one switch 6 among the multiple switches 6 located at the end of the fault section 23 to be ON state, and confirms the fault detection unit 71 of the protective relay 7 whether the fault is still continuous or has ended. This fault status monitoring unit 92 outputs, after the status detection unit 91 receives the opening completion signal and after a predetermined timing has elapsed, the closing instruction signal to the protective relay 7 connected to the same terminal as one of the switches 6 in the fault section 23. By connecting only one end of the fault section 23, in comparison with a case in which all ends of the fault section 23 are connected, a possibility is prevented such that excessive energy due to the fault continuation flows into the fault section 23, and devices like the power transmission line 5 in the fault section 23 is damaged.

The recovery processing unit 93 recovers, when the fault has ended, the fault section 23 where the fault has ended. The recovery processing unit 93 returns, when the fault has ended, all switches 6 at the end of the fault section 23 to be the ON status. The end of the fault is determined based on whether the fault detection unit 71 of the protective relay 7 does not detect a fault. More specifically, with the transmission of the closing instruction signal by the fault status monitoring unit 92 being as a start point, when a time-out of the reception of the opening completion signal by the status detection unit 91 occurs, it may be determined as the end of fault.

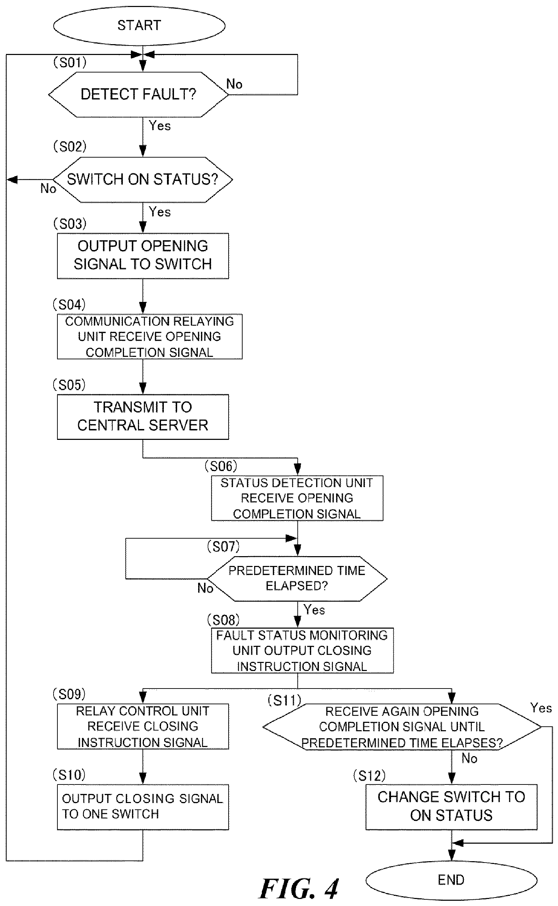

FIG. 4 is a flowchart illustrating the action of the control unit including the protective relay 7 and the central server 9 from an occurrence of fault to a recovery. When the fault detection unit 71 detects the presence of a fault (step S01: YES), if the switch 6 is in the ON state (step S02: YES), the relay-side control unit 72 outputs the opening signal to the switch 6 (step S03). This fault detection process is repeated by sampling the current value and the voltage value from the current transformer 81 and the voltage transformer 82 at a constant cycle.

The protective relay 7 provided at the terminal of the end of the fault section 23 each detects the presence of a fault, and outputs the opening signal to the corresponding switch 6. The switch 6 at the end of the fault section 23 outputs, to the corresponding protective relay 7, the opening completion signal when completing the opening action.

The communication relaying unit 73 receives the opening completion signal (step S04), and transmits the received signal to the central server 9 (step S05). The status detection unit 91 receives the opening completion signal via the signal transmission path (step S06). The fault status monitoring unit 92 counts a predetermined time after receiving the opening completion signal (step S07). Upon counting, when the predetermined time has elapsed (step S07: YES), the fault status monitoring unit 92 outputs the closing instruction signal to one of the switch 6 among the multiple switches 6 located at the end of the fault section 23 (step S08). The relay-side control unit 72 of the protective relay 7 corresponding to the one switch 6 receives the closing instruction signal (step S09), and outputs a closing signal to the one switch 6 (step S10). The one switch 6 receives the closing signal, and performs the closing action.

In this case, one of the ends of the fault section 23 is connected with the path 2 where DC power transmission is continued. Therefore, when the fault is still occurring, any one of or some of the flowing current, the current change value, and the voltage change value of the fault section 23 exceeds the threshold. Thus, the fault detection unit 71 of the protective relay 7 corresponding to the one switch 6 detects again the presence of the fault (step S01: YES). The relay-side control unit 72 outputs again the opening signal (step S03) since the one switch 6 is in the ON status (step S02: YES) . The one switch 6 performs the opening action again in response to the opening signal.

As described above, even if the fault status monitoring unit 92 outputs the closing instruction signal to the one switch 6, when the fault is still occurring, the one switch 6 changes to the OFF status again, and the fault section 23 is disconnected. When the fault is still occurring, the steps S01 to S10 are repeated.

Conversely, the recovery processing unit 93 of the central server 9 counts the predetermined time after the fault status monitoring unit 92 outputs the closing instruction signal (step S11). When the status detection unit 91 does not receive the opening completion signal within the predetermined timef (step S11: NO), the recovery processing unit 93 sets all switches 6 at the ends of the fault section 23 to be ON status (step S12).

When a fault is still occurring, before the timeout by the recovery processing unit 93, the opening completion signal from the one switch 6 closed by the fault status monitoring unit 92 is received. Hence, when the opening completion signal is received, a recovery process is disabled. When, however, the fault has ended, since the fault detection unit 71 does not detect the fault any more, the relay-side control unit 72 does not cause the one closed switch 6 to open again. Accordingly, the opening completion signal is not output, and the counting by the recovery processing unit 93 reaches the timeout. The recovery processing unit 93 takes the timeout as a reference for remove of the fault, and causes all switches 6 at the ends of the fault section 23 to be ON status in order to recover the fault section 23.

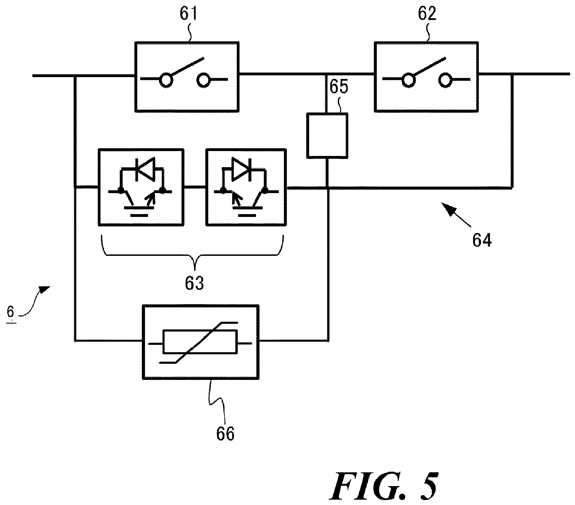

FIG. 5 illustrates an example switch 6. This switch 6 is a DC circuit breaker, and includes a mechanical disconnector 61, a mechanical circuit breaker 62, a semiconductor circuit breaker 63, a commutation circuit 64, and a commutation device 65. The mechanical disconnector 61 and the mechanical circuit breaker 62 are connected in series on the path 2 of the DC power transmission system 1. The path 2 is parallelized in the switch 6. That is, the semiconductor circuit breaker 63 is connected in parallel with the mechanical disconnector 61. The commutation circuit 64 is connected in series relative to the commutation device 65, thus connected, via the commutation device 65, in parallel with the mechanical circuit breaker 62. The semiconductor circuit breaker 63 and the commutation circuit 64 are connected in series. A surge absorber 66 is connected in parallel with the semiconductor circuit breaker 63.

The mechanical disconnector 61 has metal contacts, and with the contacts being opened, has a dielectric strength to withstand a transient recovery voltage applied to both ends of the switch 6 immediately after the shutoff of the fault point 22. in the mechanical disconnector 61, the metal contacts for connection between circuit terminals are configured by a stationary electrode and a movable electrode, thereby opening and closing the contacts by contacting or releasing the movable electrode that is linearly moved or turned relative to the stationary electrode. The metal contacts are provided in the interior of a pressure container with which an insulation gas like SF₆ is filled, thereby improving the dielectric strength of the contacts.

The mechanical circuit breaker 62 includes metal contacts, and has a capability of, with the contacts being opened, breaking the current when a flowing current vibrates and crosses the zero point. In the mechanical circuit breaker 62, for example, the metal contacts for a connection between circuit terminals is configured by a vacuum valve, thereby opening and closing the contacts by linearly moving the movable electrode relative to the stationary electrode. In addition, the mechanical circuit breaker may employ a structure of breaking a current when the flowing current crosses the zero point by the action of the commutation device 65 with the contacts being opened.

The semiconductor circuit breaker 63 has multiple switching elements 65b connected in series, and has a diode 65c connected in reverse-parallel with each switching element 65b. The switching element 65b is an element having a self-extinguishing capability, such as an IGBT (insulated gate bipolar transistor), a bipolar transistor, or a field-effect transistor. The semiconductor circuit breaker 63 includes, for example, two semiconductor stacks including the switching elements 65b laminated one another and connected in series. The two semiconductor stacks have opposite directions of the collector terminals of the respective switching elements 65b, and are capable of flowing a current or breaking the current in both transmission directions.

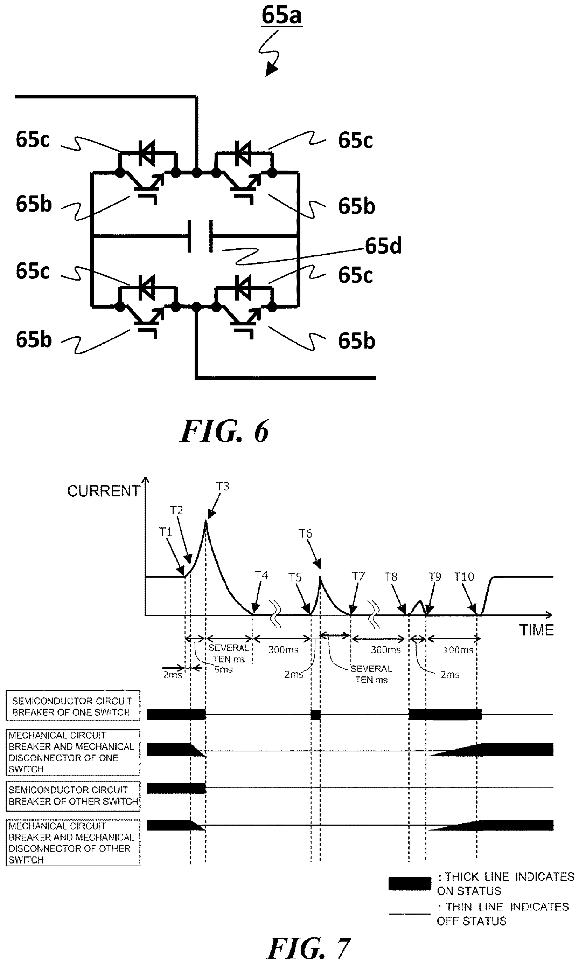

The commutation device 65 is, for example, an H-bridge unit formed by multiple H-bridge circuits 65a illustrated in FIG. 6. Each H-bridge circuit has two legs each having the two switching elements 65b connected in series. The applied switching element 65b has a self-extinguishing capability. The diode 65c are connected in reverse-parallel with each switching element 65b. These two legs are connected in parallel with each other, and a capacitor 65d is further connected in parallel with the two legs. This capacitor 65d is charged by an external power supply. In order to prevent an excessive current output by the commutation device 65 from being input directly to the mechanical circuit breaker 62, a reactor may be placed between the commutation device 65 and the mechanical circuit breaker 62 for smoothing a current change.

The surge absorber 66 is, for example, a lighting arrestor that has multiple zinc oxide elements having a non-linear resistance relative to a voltage and laminated in series, and further connected in parallel with each other. The surge absorber 66 suppresses a transient recovery voltage generated between both ends of the switch 6 after the opening action by the semiconductor circuit breaker 63, and absorbs the electromagnetic energy accumulated in the power transmission line 5.

According to such a switch 6, in a normal operation in which no fault is occurring, the semiconductor circuit breaker 63 is in the OFF status, the mechanical disconnector 61 and the mechanical circuit breaker 62 are ON status, and DC power transmission is performed via the mechanical disconnector 61 and the mechanical circuit breaker 62. The semiconductor circuit breaker 63 has a larger impedance than those of the mechanical disconnector 61 and the mechanical circuit breaker 62, and does not flow the current even if closed in the normal operation, but is in the OFF status according to this embodiment.

When a fault occurs, an opening signal is received from the protective relay 7. The switch 6 which has received the opening signal starts the opening operation by the mechanical disconnector 61 and the mechanical circuit breaker 62, while at the same time, drives the commutation device 65 to commutate the current in the path that connects the mechanical disconnector 61 and the commutation device 65. The commutation device 65 control the pulse width modulation on the ON-OFF ratio of the switching element 65b to control the output voltage in the direction in which the current to mechanical circuit breaker 62 becomes zero, and guides the current to the commutation device 65.

When the opening action by the mechanical circuit breaker 62 completes, the current becomes zero, and the flowing current of the mechanical circuit breaker 62 is broken, the semiconductor circuit breaker 63 is caused to be the ON status, and the commutation device 65 is caused to be the OFF status. In this case, the current is commutated to the path between the semiconductor circuit breaker 63 and the commutation circuit 64, and the arc produced between the contacts of the mechanical disconnector 61 in the opening action is extinguished. In addition, when the opening action by the mechanical disconnector 61 completes, and the dielectric strength voltage of the path between the mechanical disconnector 61 and the mechanical circuit breaker 62 is ensured, the semiconductor circuit breaker 63 is caused to perform the opening action. The transient recovery voltage is generated between both ends of the switch 6 after the opening action by the semiconductor circuit breaker 63. When this transient recovery voltage becomes a voltage that causes the surge absorber 66 to start the own action, the current is commutated to the surge absorber 66, and by consuming electromagnetic energy accumulated in the power transmission line 5, the current is reduced. When the current surge absorber 66 becomes zero, the opening action of the switch 6 completes.

The fault status monitoring unit 92 output the closing instruction signal to the switch 6 including the semiconductor circuit breaker 63 as explained above to cause the semiconductor circuit breaker 63 to be closed. When only one switch 6 among the multiple switches 6 located at the ends of the fault section 23 includes the semiconductor circuit breaker 63, the fault status monitoring unit 92 causes the switch 6 having the semiconductor circuit breaker 63 to perform the closing action. The fault status monitoring unit 92 stores various pieces of information on each switch 6 of DC power transmission system 1, and may output the closing instruction signal to the protective relay 7 connected to the same terminal as that of the switch 6 having the semiconductor circuit breaker 63. The semiconductor circuit breaker 63 is capable of promptly perform the opening action again while the fault is continuing, thus avoiding a possibility such that an over-current flows in the fault section 23 until the completion of the opening. In addition, the various pieces of information may be the location information on the switch 6 in the DC power transmission system 1, and the device-specific characteristics.

The recovery processing unit 93 causes, as for the multiple switches 6 located at the ends of the fault section 23 where the fault has been removed, the mechanical disconnector 61 and the mechanical circuit breaker 62 to be in the ON status. That is, for each protective relay 7 connected to the same terminal as those of the multiple switches 6, the closing instruction signal against the mechanical disconnector 61 and the mechanical circuit breaker 62 is output.

In addition, the recovery processing unit 93 outputs, when the semiconductor circuit breaker 63 is closed, a opening instruction signal for the semiconductor circuit breaker 63 after the mechanical disconnector 61 and the mechanical circuit breaker 62 have completed the closing.

### (Action)

With reference to the time chart that is FIG. 7, a control to the example DC power transmission system 1 in FIG. 1 and to the example switch 6 having the semiconductor circuit breaker 63 from the occurrence of a fault and until the recovery, and a current to be detected will be described. It is assumed that a fault has occurred in the section of the power transmission line 5 in the path 2 branched at the branch point 21.

When a fault occurs (timing T1), since the current keenly increases, the fault is detected in substantially 2 ms from the occurrence of the fault (timing T2), and for example, the two switches 6 at the ends across the power transmission line 5 complete the opening action at 5 ms (timing T3). In the opening action by the switch 6, the mechanical disconnector 61 and the mechanical circuit breaker 62 start the opening action first, and the current is commutated to the semiconductor circuit breaker 63 by the commutation device 65. At a timing when the mechanical disconnector 61 and the mechanical circuit breaker 62 complete the opening action, and the arc of the contacts is extinguished, the semiconductor circuit breaker 63 is caused to be in the OFF status.

The keenly increased current by the fault becomes zero within, for example, several ten ms since the electromagnetic energy accumulated in the power transmission line 5 is absorbed by the surge absorber 66 connected in parallel with the semiconductor circuit breaker 63 immediately after the opening action by the semiconductor circuit breaker 63 of the switch 6 (timing T4). For example, after approximately 300 ms has elapsed, within the two switches 6 at the ends, the semiconductor circuit breaker 63 is closed for one switch 6 only (timing T5) . The stand-by time for approximately 300 ms is a time until, in the case of lightning stoke, ions are produced between the power transmission line 5 and the ground, and such ions are dissipated.

At this time, when the fault has not removed yet, since the current keenly changes, after, for example, approximately 2 ms from the closing of the semiconductor circuit breaker 63, the fault is detected again by the current change rate, etc., and the semiconductor circuit breaker 63 promptly opens again (timing T6). In this case, also, the keenly increased current becomes zero within, for example, several ten ms since the electromagnetic energy accumulated in the power transmission line 5 is absorbed by the surge absorber 66 (timing T7).

In this case, what is connected to the path 2 that performs DC power transmission properly is the one switch 6 only. Hence, in comparison with a case in which the fault section 23 is returned to the path 2 that properly performs DC power transmission within the fault continuous time period, no excessive energy flows into the fault section 23. In addition, instead of the mechanical disconnector 61 and the mechanical circuit breaker 62, by closing and opening again the semiconductor circuit breaker 63, quick connection and disconnection are enabled, thus preventing a possibility such that the current becomes excessive before the opening again, disabling the opening action.

Furthermore, after the opening action again, for example, the system further stands by for 300ms, and the semiconductor circuit breaker 63 is closed again for only one switch 6 between the two switches 6 at the ends (timing T8) . At this time, when the fault has been already removed, since the charging current flows to the power transmission line 5, the current change is not keen in comparison with the case in which the fault is still occurring, and the current value is small. Therefore, for example, when 2 ms after the closing of the semiconductor circuit breaker 63 has elapsed, a determination is made such that the fault has been removed (timing T9).

When the determination such that the fault has been removed, the remaining mechanical disconnector 61 and mechanical circuit breaker 62 parallel to the semiconductor circuit breaker 63 are caused to start the closing action, and the other switch in the two switches 6 at the ends are caused to start the closing action (timing T9). The respective mechanical disconnectors 61 and mechanical circuit breakers 62 of the two switches 6 at the ends complete the closing action within approximately 100ms (timing T10) . Upon completion of this closing action, the section where the fault has been removed is changed to the normal current flowing status.

### (Effects)

As described above, according to this embodiment, when the occurrence of a fault is detected relative to the DC power transmission path formed by diverging into multiple paths or converging multiple paths, first, the switches 6 are opened to disconnect the fault section 23 from the DC power transmission path, second, after the opening action, one of the opened switches 6 is caused to be closed, third, after one of the switches 6 is closed, when the continuation of the fault is detected, the closed switch 6 is opened again, and fourth, after the one switch 6 is closed, when the presence of a fault is not detected, all opened switches 6 to disconnect the fault section 23 from the DC power transmission path are returned to the closed status, thereby recovering the fault section.

Accordingly, the continuation of the fault or the end thereof can be confirmed without causing excessive energy to flow into the fault section 23. Therefore, a possibility such that, despite of the continuing fault, the disconnected fault section 23 is connected again, the over-current flows into the fault section 23, and devices, such as the power transmission line 5 and the converter 4, are damaged can be avoided. Further, since the continuation of the fault can be easily observed, the fault section 23 can be promptly recovered to the DC system at the timing at which the fault is removed. That is, according to this embodiment, the section where the fault has been removed can be promptly, safely and surely recovered to the DC system.

In addition, as for the switch 6, the semiconductor circuit breaker 63 is disposed in parallel with the mechanical disconnector 61 and the mechanical circuit breaker 62, and when observing the continuation of the fault or the end thereof, the semiconductor circuit breaker 63 is loaded. Thus, even if the fault is still occurring, the opening action can be immediately performed again to prevent an over-current from flowing into the fault section 23, thus further surely protecting the devices of the fault section 23 against damages. Still further, when observing the continuation of the fault or the end thereof, there is no need to actuate the commutation device 65, and thus it is not necessary to recharge the capacitor 65d of the commutation device 65 prior to the closing action by the switch 6. Thus, it is possible to omit the waiting time necessary for recharging, and the fault section 23 can be promptly recovered to the DC system. It is also unnecessary to have a large capacity of the capacitor 65d of the commutation device 65 which enables the commutation actions twice or more, thus suppressing an increase in size of the switch 6 and in costs thereof.

### (Another Example 1 of DC Power Transmission Path)

Other examples of the DC power transmission path, the switch 6, and the commutation device 65 will be described below. Those DC power transmission line, switch 6, and commutation device 65 are also within the scope of the DC power transmission system 1 according to the embodiment.

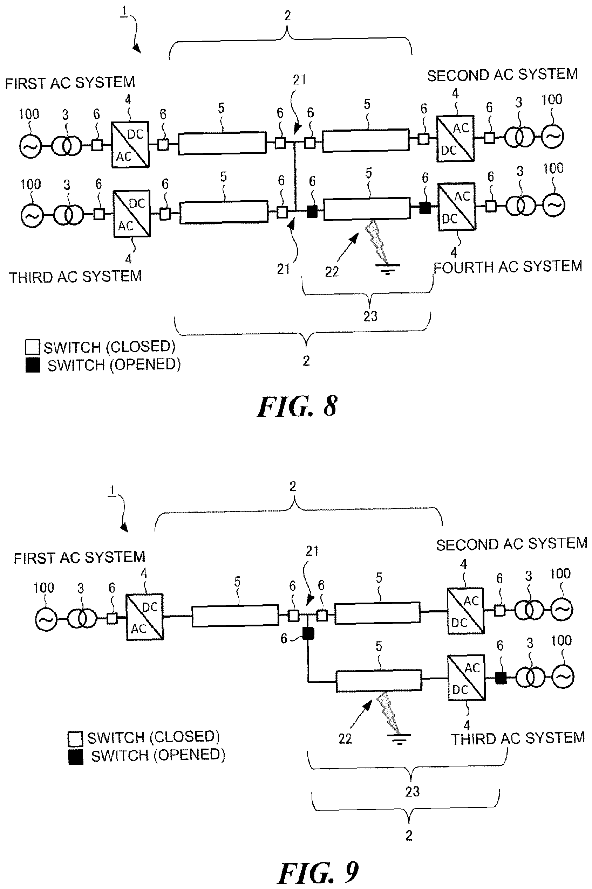

As illustrated in FIG. 8, the DC power transmission system 1 according to this embodiment may employ a form of mutually connecting the four AC system 100 to each other. That is, the DC power transmission system 1 includes the path 2 that connects the first AC system 100 with the second AC system 100, and the path 2 that connects the third AC system 100 with the fourth AC system 100. Each path 2 is formed by the power transmission line 5 divided into two sections, each branch point 21 is provided between the power transmission lines 5. The each branch point 21 is connected each other. The switches 6 are provided between the transformer 3 and the converter 4, between the converter 4 and the power transmission line 5, and between the power transmission line 5 and the branch point 21, respectively.

When, for example, the fault occurs in the power transmission line 5 at the fourth-AC-system-100 side, the switch 6 between the power transmission line 5 and the converter 4, and the switch 6 between the power transmission line 5 and the branch point 21 6 are opened, and the switch 6 at either side is closed to confirm the continuation of the fault or the end thereof. When the fault has been removed, both switches 6 are closed.

### (Another Example 2 of DC Power Transmission Path)

As illustrated in FIG. 9, the DC power transmission system 1 includes the path 2 that connects the first AC system 100 with the second AC system 100. The path 2 is divided into two sections that are each the power transmission line 5. The system is further provided with the path 2 that connects between the branch point 21 and the third AC system 100. The path 2 that connects between the branch point 21 and the third AC system 100 is formed of a section that is the power transmission lines 5. The switches 6 are provided between the transformer 3 and the converter 4, and between the power transmission line 5 and the branch point 21. That is, the converter 4 and the power transmission line 5 are involved in one section, and the switches 6 are provided at both ends of this section.

When, for example, a fault occurs in the power transmission line 5 at the third-AC-system-100 side, the switch 6 between the power transmission line 5 and the branch point 21, and the switch 6 between the converter 4 and the transformer 3 and involved in the section of the power transmission line 5 is opened. That is, the switch 6 located at the AC-system-100 side relative to the converter 4 is opened. Next, by closing the switch 6 at one side, the continuation of the fault or the end thereof is confirmed. When the fault has been already removed, the switches 6 at both ends are closed.

### (Another Example 3 of DC Power Transmission Path)

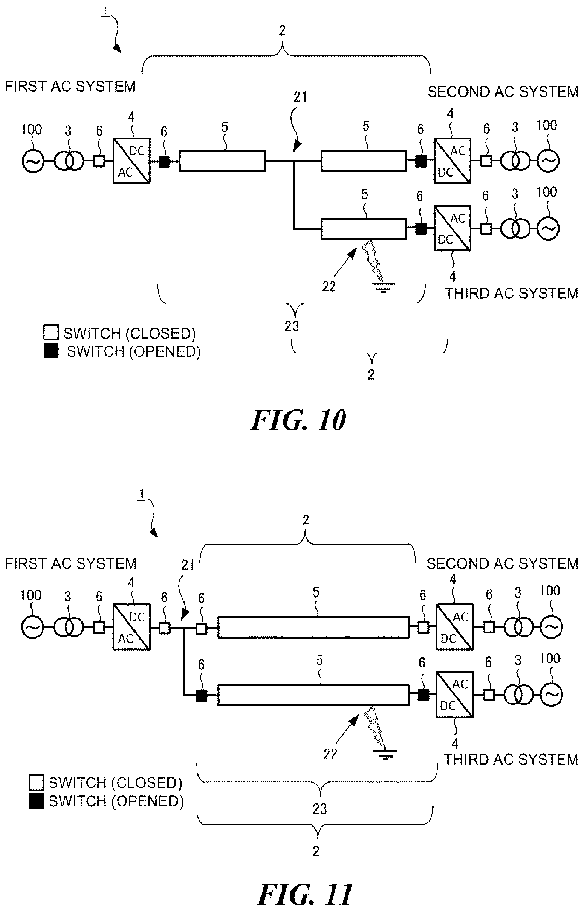

As illustrated in FIG. 10, the DC power transmission system 1 includes the path 2 that connects the first AC system 100 with the second AC system 100. The path 2 is divided into two sections which are each the power transmission line 5, and the branch point 21 is provided between the sections that are the power transmission lines 5. The path 2 that connects the branch point 21 with the third AC system 100 is further formed, and the path 2 is formed of a section that is the power transmission line 5. The switches 6 are provided between the transformer 3 and the converter 4, and between the converter 4 and the power transmission line 5. That is, the three sections that are the power transmission lines 5 and the branch point 21 is not divided by the switch 6, but forms a single section.

When, for example, a fault occurs in the power transmission line 5 at the third-AC-system-100 side, all three switches 6 that divide the DC power transmission system and the AC power transmission system, and between the converter 4 and the power transmission line 5 are opened. Next, by closing any one of the three switches 6, the continuation of the fault or the end thereof is confirmed. When the fault has been already removed, all switches 6 are closed.

### (Another example 4 of DC Power Transmission Path)

As illustrated in FIG. 11, the DC power transmission system 1 includes the path 2 that connects the first AC system 100 with the second AC system 100. The branch point 21 is provided in the path 2, and the path 2 extending from the branch point 21 to the third AC system 100 is further formed. Each path 2 is formed of the section that is the power transmission lines 5. The branch point 21 is provided at a location between the power transmission line 5 and the converter 4. The switches 6 are provided between the transformer 3 and the converter 4, between the converter 4 and the branch point 21, between the branch point 21 and the power transmission line 5, and between the power transmission line 5 and the converter 4.

When, for example, a fault occurs in the power transmission line 5 at the third-AC-system-100 side, the switch 6 between the converter 4 and the power transmission line 5, and the switch 6 between the power transmission line 5 and the branch point 21 are opened. Next, by closing the switch 6 at one end, the continuation of the fault or the end thereof is confirmed. When the fault has been already removed, all switches 6 are closed.

### (Another Example 5 of DC Power Transmission Path)

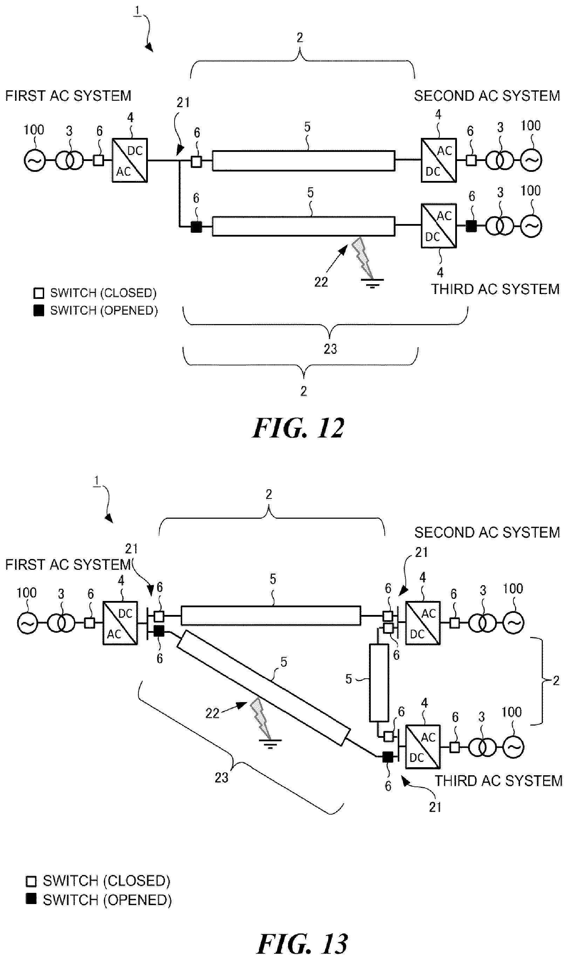

As illustrated in FIG. 12, the DC power transmission system 1 includes the path 2 that connects the first AC system 100 with the second AC system 100. The branch point 21 is provided in the path 2, and the path 2 extending from the branch point 21 to a third AC system 100 is further formed. Each path 2 is formed of the section that is the power transmission lines 5. The branch point 21 is provided at a location between the power transmission line 5 and the converter 4. The switches 6 are provided between the transformer 3 and the converter 4, and between the branch point 21 and the power transmission line 5. The converter 4 and the branch point 21 are involved in the single section, and the switches 6 are provided at both ends of this section.

When, for example, a fault occurs in the power transmission line 5 at the third-AC-system-100 side, the switch 6 between the transformer 3 of the third AC system 100 and the converter 4, and the switch 6 between the branch point 21 and the power transmission line 5 are opened. Next, by closing the switch 6 at the one end, the continuation of the fault or the end thereof is confirmed. When the fault has been already removed, all switches 6 are closed.

### (Another Example 6 of DC Power Transmission Path)

As illustrated in FIG. 13, the DC power transmission system 1 triangularly connects the first AC system 100, the second AC system 100, and the third AC system 100. That is, the DC power transmission system 1 includes the path 2 that connects the first AC system 100 with the second AC system 100, the path 2 that connects the first AC system 100 with the third AC system 100, and the path 2 that connects the second AC system 100 with the third AC system 100. The switches 6 are provided between the converter 4 and the transformer 3, and between the converter 4 and each power transmission line 5.

When, for example, a fault occurs in the power transmission line 5 that connects the first AC system 100 with the third AC system 100, the switches 6 at both ends of the power transmission line 5 are opened. Next, by closing the switch 6 at one end, the continuation of the fault or the end thereof is confirmed. When the fault has been already removed, all switches 6 are closed.

### (Another Example 1 of Switch)

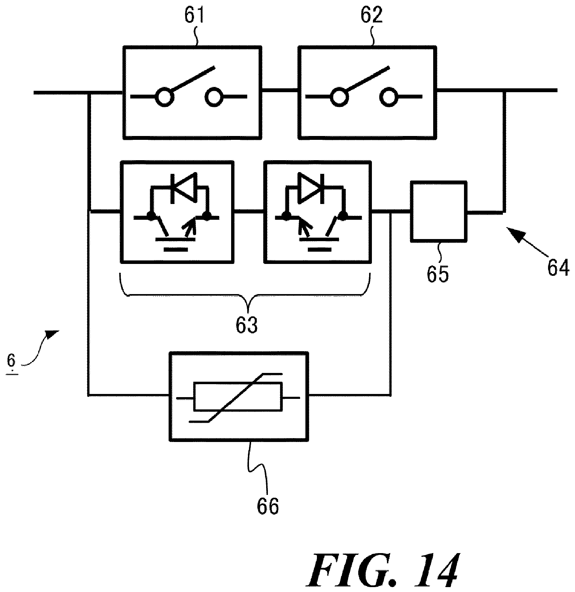

The switch 6 employing the form illustrated in FIG. 1 is also applicable. As illustrated in FIG. 14, the switch 6 connects the mechanical disconnector 61 and the mechanical circuit breaker 62 in series, and is installed on the path 2 of the DC power transmission system 1. The mechanical disconnector 61 and the mechanical circuit breaker 62 are connected in parallel with the circuit that connects the semiconductor circuit breaker 63 and the commutation device 65 in series. The surge absorber 66 is connected in parallel with the semiconductor circuit breaker 63.

According to this switch 6, in the normal operation when no fault is occurring, the semiconductor circuit breaker 63 are opened, but the mechanical disconnector 61 and the mechanical circuit breaker 62 are in the ON status, and thus DC power is transmitted via the mechanical disconnector 61 and the mechanical circuit breaker 62. When a fault occurs, the mechanical disconnector 61 and the mechanical circuit breaker 62 are opened, but the semiconductor circuit breaker 63 is caused to be in the ON status. Simultaneously, the commutation device 65 is actuated, and thus the current is guided to the circuit side of the semiconductor circuit breaker 63 and of the commutation device 65. After the mechanical disconnector 61 and the mechanical circuit breaker 62 have completed the opening action, the semiconductor circuit breaker 63 is opened, thereby commutating the current to the surge absorber 66. By consuming the electromagnetic energy stored in the power transmission line 5 by the surge absorber 66, the current is interrupted. In the determination on the continuation of the fault and the end thereof, the semiconductor circuit breaker 63 is closed and opened.

### (Another Example 2 of Switch)

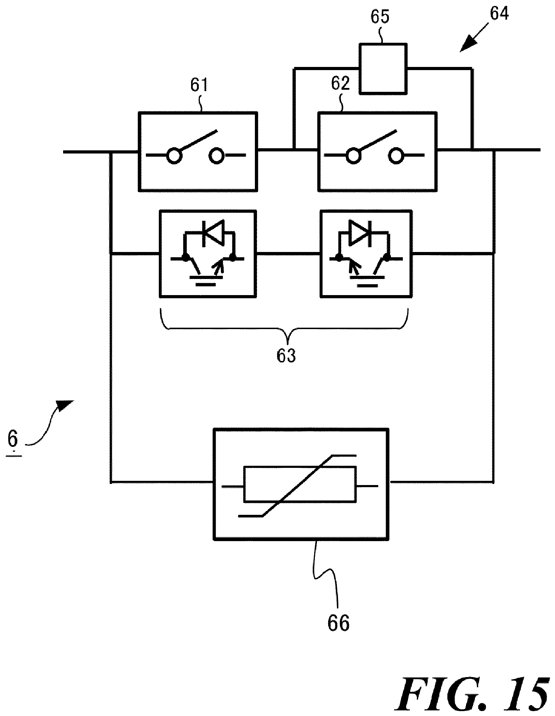

The switch 6 that employs a form illustrated in FIG. 15 is also applicable. As illustrated in FIG. 15, the switch 6 connects the mechanical disconnector 61 and the mechanical circuit breaker 62 in series, and is installed on the path 2 of the DC power transmission system 1. The commutation circuit 64 including the commutation device 65 is connected in parallel with the mechanical circuit breaker 62. In addition, the semiconductor circuit breaker 63 is connected in parallel with the series of the mechanical disconnector 61 and the mechanical circuit breaker 62. The semiconductor circuit breaker 63 and the commutation circuit 64 are in a parallel relationship. The surge absorber 66 is connected in parallel with the semiconductor circuit breaker 63.

According to this switch 6, in the normal operation in which no fault is occurring, the semiconductor circuit breaker 63 is opened, but the mechanical disconnector 61 and the mechanical circuit breaker 62 are in the ON status, and thus DC power is transmitted via the mechanical disconnector 61 and the mechanical circuit breaker 62. When a fault occurs, the mechanical disconnector 61 and the mechanical circuit breaker 62 are opened, and the semiconductor circuit breaker 63 is caused to be in the ON status. Simultaneously, the commutation device 65 is actuated, the current is guided to the circuit of the semiconductor circuit breaker 63. After the mechanical disconnector 61 and the mechanical circuit breaker 62 have completed the opening action, the semiconductor circuit breaker 63 is opened, and the current is commutated to the surge absorber 66. By consuming the electromagnetic energy stored in the power transmission line 5 by the surge absorber 66, the current is interrupted. In the determination on the continuation of the fault and the end thereof, the semiconductor circuit breaker 63 is closed and opened.

### (Another Example 3 of Switch)

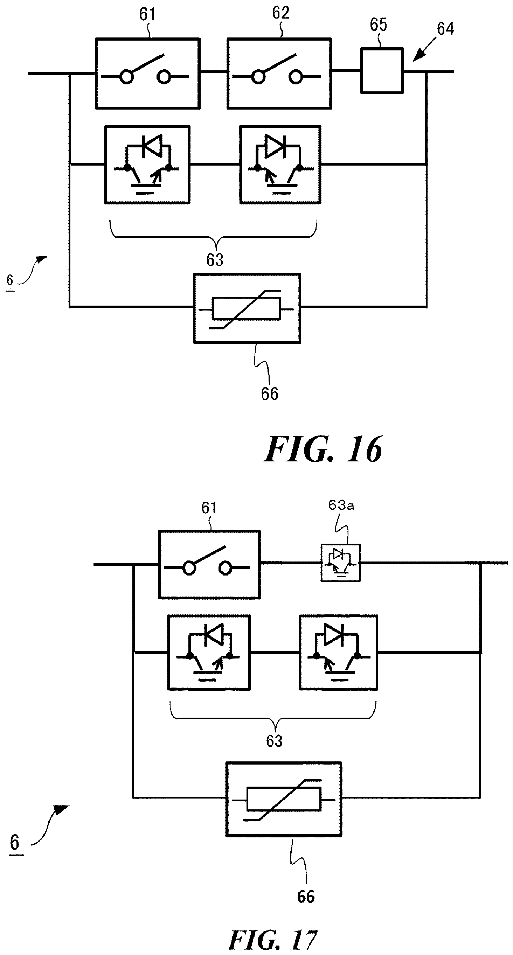

The switch 6 employing the form illustrated in FIG. 16 is also applicable. As illustrated in FIG. 16, the switch 6 connects the mechanical disconnector 61, the mechanical circuit breaker 62 and the commutation device 65 in series, and is installed on the DC power transmission path 2. The semiconductor circuit breaker 63 is connected in parallel with a successive circuit that includes the mechanical disconnector 61, the mechanical circuit breaker 62 and the commutation device 65. The surge absorber 66 is connected in parallel with the semiconductor circuit breaker 63.

According to this switch 6, in the normal operation in which no fault is occurring, the semiconductor circuit breaker 63 is opened, but the mechanical disconnector 61 and the mechanical circuit breaker 62 are in the ON status, and thus DC power is transmitted via the mechanical disconnector 61 and the mechanical circuit breaker 62. When a fault occurs, the mechanical disconnector 61 and the mechanical circuit breaker 62 are opened, but the semiconductor circuit breaker 63 is caused to be in the ON status. Simultaneously, time the commutation device 65 is actuated, and the current is guided to the loaded semiconductor circuit breaker 63. Next, after the mechanical disconnector 61 and the mechanical circuit breaker 62 have completed the opening action, the semiconductor circuit breaker 63 is opened, and the current is commutated to the surge absorber 66. By consuming the electromagnetic energy stored in the power transmission line 5 by the surge absorber 66, the current is interrupted. In the determination on the continuation of the fault and the end thereof, the semiconductor circuit breaker 63 is closed and opened.

### (Another Example 4 of Switch)

The switch 6 employing the form illustrated in FIG. 17 is also applicable. As illustrated in FIG. 17, the mechanical disconnector 61 is connected in series with a semiconductor circuit breaker 63a for current commutation, and the switch is installed on DC power transmission path 2. The semiconductor circuit breaker 63 is installed in parallel with the series of the mechanical disconnector 61 and the semiconductor circuit breaker 63a. In addition, the surge absorber 66 is connected in parallel with the semiconductor circuit breaker 63.

According to this switch 6, in the normal operation in which no fault is occurring, the mechanical disconnector 61 and the semiconductor circuit breaker 63a in series therewith are closed, and thus DC power is transmitted through this path. The semiconductor circuit breaker 63 connected in parallel therewith is opened. When a fault occurs, the semiconductor circuit breaker 63a in series with the mechanical disconnector 61 is opened, and the semiconductor circuit breaker 63 connected in parallel is closed, the current is guided to the semiconductor-circuit-breaker-63 side connected in parallel with the mechanical disconnector 61 from the semiconductor circuit breaker 63a. The mechanical disconnector 61 is opened, the semiconductor circuit breaker 63 connected in parallel is opened after the completion of opening, and the current is commutated to the surge absorber 66. By consuming the electromagnetic energy stored in the power transmission line 5 by the surge absorber 66, the current is interrupted. In the determination on the continuation of the fault and the end thereof, the semiconductor circuit breaker 63 connected in parallel is closed and opened.

### (Another example 5 of Switch)

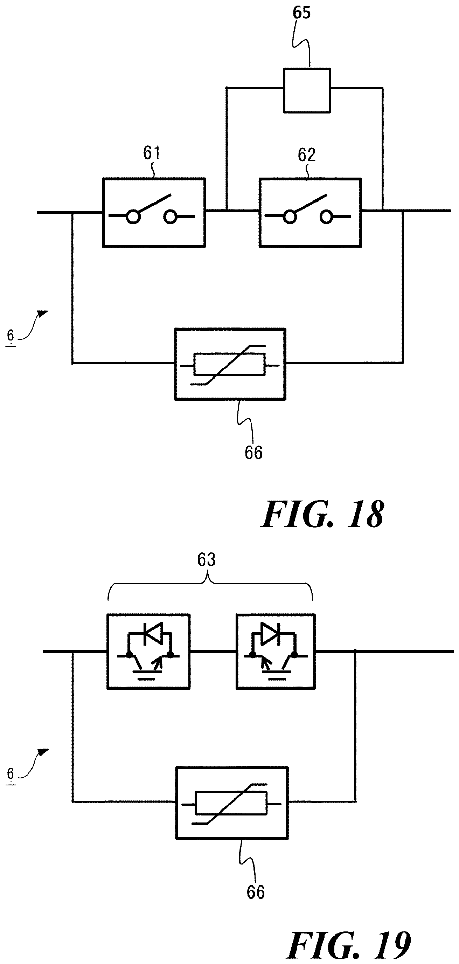

The switch 6 is not limited to the hybrid type involving the mechanical and the semiconductor circuit breaker 63, and as illustrated in FIG. 18, the mechanical disconnector 61 and the mechanical circuit breaker 62 may be connected in series, and may be installed on the DC power transmission path 2. The commutation device 65 is connected in parallel with the mechanical circuit breaker 62. The surge absorber 66 is connected in parallel with the mechanical disconnector 61 and the mechanical circuit breaker 62. When the switch 6 is opened, the commutation device 65 is actuated to form a point where the flowing current crosses zero relative to the mechanical circuit breaker 62. Simultaneously, by opening the mechanical disconnector 61 and the mechanical circuit breaker 62, the current is commutated to the surge absorber 66. By consuming the electromagnetic energy stored in the power transmission line 5 by the surge absorber 66, the current is interrupted. Even in this switch 6, by closing one of the switches 6 at both ends or multiple ends, a determination on the continuation of the fault and the end thereof is enabled. However, it is desirable that the one switch 6 among the switches 6 at both ends or multiple ends of the fault section should have the semiconductor circuit breaker 63.

### (Another Example 6 Switch)

As illustrated in FIG. 19, the switch 6 may be a type having the semiconductor circuit breaker 63 installed on DC power transmission path 2. The surge absorber 66 is connected in parallel with the semiconductor circuit breaker 63. According to this switch 6, when the semiconductor circuit breaker 63 is caused to always flow a current, although there is a problem like generation of heat, this problem can be addressed by, for example, placing a cooling device.

### (Another example of Commutation Device)

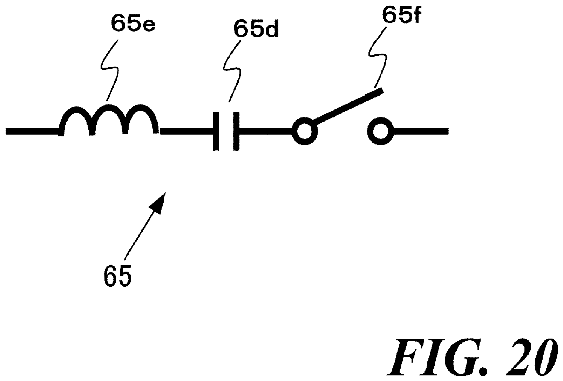

Although the H-bridge unit has been described as an example for the commutation device 65, as illustrated in FIG. 20, a reactor 65e, a capacitor 65d and a switch 65f may be connected in series to form the commutation device 65.

### (Other Embodiments)

The present disclosure is not directly limited to the above embodiments, and can be carried out by modifying the components without departing from the scope of the present disclosure in practice. In addition, various species of the present disclosure can be made by an appropriate combination of the multiple components described in the above embodiments.

### REFERENCE SIGNS LIST

- 1: DC power transmission system
- 2: Path
- 21: Branch point
- 22: Fault point
- 23: Fault section
- 3: Transformer
- 4: Converter
- 5: Power transmission line
- 6: Switch
- 61: Mechanical disconnector
- 62: Mechanical circuit breaker
- 63: Semiconductor circuit breaker
- 63a: Semiconductor circuit breaker
- 64: Commutation circuit
- 65: Commutation device
- 65a: H-bridge circuit
- 65b: Switching element
- 65c: Diode
- 65d: Capacitor
- 65e: Reactor
- 65f: Switch
- 66: Surge absorber
- 7: Protective relay
- 71: Fault detection unit
- 72: Relay-side control unit
- 73: Communication relaying unit
- 81: Current transformer
- 82: Voltage transformer
- 9: Central server
- 91: Status detection unit
- 92: Fault status monitoring unit
- 93: Recovery processing unit
- 100: AC system

## Claims

1. A DC power transmission system (1) comprising:
a DC power transmission path (2) formed by diverging into a plurality of paths or converging a plurality of paths;
multiple switches (6) installed so as to divide the DC power transmission path into individual sections;
a detection unit (71) detecting a presence of a fault; and
a control unit (72) controlling an opening and a closing of each switch based on a detection result by the detection unit,
wherein the control unit is adapted for:
causing some of the switches to perform an opening action so as to disconnect the section where a fault occurs from the DC power transmission path when the detection unit detects an occurrence of the fault;
causing only one of the opened switches due to the occurrence of the fault to perform a closing action after the opening action;
causing the one closed switch to perform a re-opening action when the detection unit detects that the fault is still occurring after the closing action of the one switch; and
returning all of the switches opened in order to disconnect the fault section from the DC power transmission path to the closed state when the detection unit does not detect that the fault is still occurring after the closing action of the one switch, thereby performing a recovering action of the fault section.

2. The DC power transmission system according to claim 1, wherein:
at least one of the switches includes a semiconductor circuit breaker (63) having a self-extinguishing ability and disposed so as to be capable of shutting off alone the fault section; and
the control unit causes the semiconductor circuit breaker of the one switch to perform the closing action and the re-opening action.

3. The DC power transmission system according to claim 2, wherein:
at least one of the switches comprises a mechanical circuit breaker (62) with a metal contact in parallel with the semiconductor circuit breaker; and
the control unit further closes the mechanical circuit breaker for the recovery action when the detection unit does not detect that the fault is still occurring.

4. The DC power transmission system according to any one of claims 1 to 3, wherein the control unit comprises:
a protective relay (7) comprising the detection unit, and causing the one switch to perform the opening action and the re-opening action based on a detection of the presence of the fault; and
a central server (9) instructing the protective relay to perform the closing action and the recovery action in response to a presence or absence of a control by the protective relay for the opening action and the re-opening action.

5. The DC power transmission system according to claim 4, wherein the central server outputs an instruction for the recovery action to the protective relay when no signal indicating a completion of opening is output from the one switch after an instruction for the closing action is given.

6. The DC power transmission system according to any one of claims 1 to 5, further comprising a converter (4) installed at a terminal end of the DC power transmission path, and mutually converting AC and DC, wherein:
the section including the terminal end of the DC power transmission path is divided by an AC circuit breaker provided between an AC system and the converter; and
at least one of the switches to be controlled by the control unit is the AC circuit breaker.

7. The DC power transmission system according to claim 2 or 3 or any one of claims 4 to 5 when depending on claim 2, further comprising a converter (4) installed at a terminal end of the DC power transmission path, and mutually converting AC and DC, wherein:
the section including the terminal end of the DC power transmission path is divided by a DC circuit breaker provided between the converter and a power transmission line;
at least one of the switches to be controlled by the control unit is the DC circuit breaker; and
a surge absorber (66) connected in parallel with the semiconductor circuit breaker (63).

8. The DC power transmission system according to any one of claims 1 to 7, wherein the detection unit detects an occurrence of the fault and a continuation thereof based on a flowing current in the section, a change in the current, a change in voltage, or a combination thereof.

9. The DC power transmission system according to claim 8, wherein the detection unit stores, in advance, a fault occurrence detection current threshold higher than a DC current value when no fault is occurring in the section, and a current threshold for confirming the continuation of the fault or an end thereof and higher than a charging current value in the section but lower than the DC current value when no fault is occurring in the section.

10. The DC power transmission system according to claim 8 or 9, wherein the detection unit stores, in advance, a threshold for a current change that is gradual relative to a current change when the fault occurs in the section, but is keener than the current change when the charging current flows in the section.

11. A central server (9) controlling a current breaking and a current flowing of a DC power transmission path (2) formed by diverging into a plurality of paths or converging a plurality of paths, wherein the central server:
is connected to, via a signal transmission path, a protective relay (7) controlling each switch (6) installed so as to divide the DC power transmission path into individual sections;
is configured to output, to the protective relay, a signal to cause only one of opened switches due to an occurrence of a fault to perform a closing action, the opened switches are opened so as to disconnect the section where the fault is occurring from the DC power transmission path after the protective relay detects a presence of the fault; and
is configured to output, to the protective relay, a signal for closing all of the switches opened in order to disconnect the fault section from the DC power transmission path when the protective relay does not detect that the fault is still occurring after one of the switches is closed, thereby performing a recovering action of the fault section.

12. A recovery method after a fault of a DC power transmission path (2) formed by diverging into a plurality of paths or converging a plurality of paths, the method comprising:
detecting a presence of a fault;
opening switches (6) so as to disconnect a section where the fault is occurring from the DC power transmission path when detecting the presence of the fault;
closing only one of the switches opened due to the occurrence of the fault after the opening;
opening again the one closed switch when detecting that the fault is still occurring after the one switch is closed; and
returning all of the switches opened in order to disconnect the fault section from the DC power transmission path to be closed when not detecting that the fault is still occurring after the one switch is closed, thereby recovering the fault section.

## Patentansprüche

1. Gleichstromleistungsübertragungssystem (1), das umfasst:
einen Gleichstromleistungsübertragungsweg (2), der durch Verzweigen in mehrere Wege oder Zusammenlaufen mehrerer Wege gebildet ist;
mehrere Schalter (6), die eingerichtet sind, um den Gleichstromleistungsübertragungsweg in einzelne Abschnitte zu unterteilen;
eine Detektionseinheit (71), die ein Vorhandensein eines Fehlers detektiert; und
eine Steuereinheit (72), die ein Öffnen und ein Schließen jedes Schalters basierend auf einem Ergebnis der Detektion durch die Detektionseinheit steuert,
wobei die Steuereinheit geeignet ist zum:
Bewirken, dass einige der Schalter einen Öffnungsvorgang durchführen, um den Abschnitt, wo der Fehler auftritt, von dem Gleichstromleistungsübertragungsweg zu trennen, wenn die Detektionseinheit ein Auftreten des Fehlers detektiert;
Bewirken, dass nur einer der aufgrund des Auftretens des Fehlers geöffneten Schalter einen Schließvorgang nach dem Öffnungsvorgang durchführt;
Bewirken, dass der eine geschlossene Schalter einen Vorgang zur erneuten Öffnung durchführt, wenn die Detektionseinheit detektiert, dass der Fehler nach dem Schließvorgang des einen Schalters immer noch auftritt; und
Zurückbringen sämtlicher Schalter, die geöffnet wurden, um den Fehlerabschnitt von dem Gleichstromleistungsübertragungsweg zu trennen, in den geschlossenen Zustand, wenn die Detektionseinheit nicht detektiert, dass der Fehler nach dem Schließvorgang des einen Schalters immer noch auftritt, wodurch ein Wiederherstellungsvorgang des Fehlerabschnitts durchgeführt wird.

2. Gleichstromleistungsübertragungssystem nach Anspruch 1, wobei:
mindestens einer der Schalter einen Halbleiterstromunterbrecher (63) umfasst, der eine Selbstlöschungsfähigkeit aufweist und derart angeordnet ist, dass er in der Lage ist, den Fehlerabschnitt alleine auszuschalten; und
die Steuereinheit bewirkt, dass der Halbleiterstromunterbrecher des einen Schalters den Schließvorgang und den Vorgang zur erneuten Öffnung durchführt.

3. Gleichstromleistungsübertragungssystem nach Anspruch 2, wobei:
mindestens einer der Schalter einen mechanischen Stromunterbrecher (62) mit einem Metallkontakt parallel zu dem
Halbleiterstromunterbrecher umfasst; und
die Steuereinheit ferner den mechanischen Stromunterbrecher für den Wiederherstellungsvorgang schließt, wenn die Detektionseinheit nicht detektiert, dass der Fehler immer noch auftritt.

4. Gleichstromleistungsübertragungssystem nach einem der Ansprüche 1 bis 3, wobei die Steuereinheit umfasst:
ein Schutzrelais (7), das die Detektionseinheit umfasst und bewirkt, dass der eine Schalter den Öffnungsvorgang und den Vorgang zur erneuten Öffnung basierend auf einer Detektion des Vorhandenseins des Fehlers durchführt; und
einen zentralen Server (9), der das Schutzrelais anweist, den Schließvorgang und den Wiederherstellungsvorgang als Reaktion auf ein Vorhandensein oder Nichtvorhandensein einer Steuerung durch das Schutzrelais für den Öffnungsvorgang oder den Vorgang zur erneuten Öffnung durchzuführen.

5. Gleichstromleistungsübertragungssystem nach Anspruch 4, wobei der zentrale Server eine Anweisung für den Wiederherstellungsvorgang an das Schutzrelais ausgibt, wenn kein Signal, das einen Abschluss des Öffnens angibt, von dem einen Schalter ausgegeben wird, nachdem eine Anweisung für den Schließvorgang erteilt wurde.

6. Gleichstromleistungsübertragungssystem nach einem der Ansprüche 1 bis 5, das ferner einen Wandler (4) umfasst, der an einem Anschlussende des Gleichstromleistungsübertragungswegs eingerichtet ist und Wechselstrom und Gleichstrom gegenseitig umwandelt, wobei:
der Abschnitt, der das Anschlussende des Gleichstromleistungsübertragungswegs umfasst, durch einen Wechselstromunterbrecher geteilt ist, der zwischen einem Wechselstromsystem und dem Wandler bereitgestellt ist; und
mindestens einer der Schalter, der durch die Steuereinheit zu steuern ist, der Wechselstromunterbrecher ist.

7. Gleichstromleistungsübertragungssystem nach Anspruch 2 oder 3 oder einem der Ansprüche 4 bis 5, wenn abhängig von Anspruch 2, das ferner einen Wandler (4) umfasst, der an einem Anschlussende des Gleichstromleistungsübertragungswegs eingerichtet ist und Wechselstrom und Gleichstrom wechselseitig umwandelt, wobei:
der Abschnitt, der das Anschlussende des Gleichstromleistungsübertragungswegs umfasst, durch einen Gleichstromunterbrecher geteilt ist, der zwischen dem Wandler und einer Leistungsübertragungsleitung bereitgestellt ist;
mindestens einer der Schalter, der durch die Steuereinheit zu steuern ist, der Gleichstromunterbrecher ist; und
ein Überspannungsschutz (66) mit dem Halbleiterstromunterbrecher (63) parallelgeschaltet ist.

8. Gleichstromleistungsübertragungssystem nach einem der Ansprüche 1 bis 7, wobei die Detektionseinheit ein Auftreten des Fehlers und dessen Fortbestehen basierend auf einem fließenden Strom in dem Abschnitt, einer Änderung beim Strom, einer Änderung bei der Spannung oder einer Kombination davon detektiert.

9. Gleichstromleistungsübertragungssystem nach Anspruch 8, wobei die Detektionseinheit im Voraus einen Stromschwellenwert für das Auftreten eines Fehlers, der höher als ein Gleichstromwert ist, wenn kein Fehler in dem Abschnitt auftritt, und einen Stromschwellenwert zum Bestätigen des Fortbestehens des Fehlers oder eines Endes davon und höher als ein Ladestromwert in dem Abschnitt, aber niedriger als der Gleichstromwert, wenn kein Fehler in dem Abschnitt auftritt, speichert.

10. Gleichstromleistungsübertragungssystem nach Anspruch 8 oder 9, wobei die Detektionseinheit im Voraus einen Schwellenwert für eine Stromänderung speichert, die in Bezug auf eine Stromänderung, wenn der Fehler in dem Abschnitt aufritt, allmählich ist, aber schärfer ist als die Stromänderung, wenn der Ladestrom in dem Abschnitt fließt.

11. Zentraler Server (9), der ein Unterbrechen eines Stroms und ein Fließen eines Stroms eines Gleichstromleistungsübertragungsweges (2) steuert, der durch Verzweigen in mehrere Wege oder Zusammenlaufen mehrerer Wege gebildet ist, wobei der zentrale Server:
über einen Signalübertragungsweg mit einem Schutzrelais (7) verbunden ist, das jeden Schalter (6) steuert, der eingerichtet ist, um den Gleichstromleistungsübertragungsweg in einzelne Abschnitte zu teilen,
ausgestaltet ist, um an das Schutzrelais ein Signal auszugeben, um zu bewirken, dass nur einer der aufgrund eines Auftretens eines Fehlers geöffneten Schalter einen Schließvorgang durchführt, die geöffneten Schalter geöffnet werden, um den Abschnitt, wo der Fehler auftritt, von dem Gleichstromleistungsübertragungsweg zu trennen, nachdem das Schutzrelais ein Vorhandensein des Fehlers detektiert hat; und
ausgestaltet ist, um an das Schutzrelais ein Signal zum Schließen sämtlicher Schalter auszugeben, die geöffnet wurden, um den Fehlerabschnitt von dem Gleichstromleistungsübertragungsweg zu trennen, wenn das Schutzrelais nicht detektiert, dass der Fehler immer noch auftritt, nachdem einer der Schalter geschlossen wurde, wodurch ein Wiederherstellungsvorgang des Fehlerabschnitts durchgeführt wird.

12. Wiederherstellungsverfahren nach einem Fehler eines Gleichstromleistungsübertragungswegs (2), der durch Verzweigen in mehrere Wege oder Zusammenlaufen mehrerer Wege gebildet ist, wobei das Verfahren umfasst:
Detektieren eines Vorhandenseins eines Fehlers;
Öffnen von Schaltern (6), um einen Abschnitt, wo der Fehler aufritt, beim Detektieren des Vorhandenseins des Fehlers von dem Gleichstromleistungsübertragungsweg zu trennen;
Schließen nur eines der aufgrund des Auftretens des Fehlers nach dem Öffnen geöffneten Schalter;
erneutes Öffnen des einen geschlossenen Schalters, wenn detektiert wird, dass der Fehler immer noch auftritt, nachdem der eine Schalter geschlossen wurde; und
Zurückbringen sämtlicher Schalter, die geöffnet wurden, um den Fehlerabschnitt von dem Gleichstromleistungsübertragungsweg zu trennen, um geschlossen zu werden, wenn nicht detektiert wird, dass der Fehler immer noch auftritt, nachdem der eine Schalter geschlossen wurde, wodurch der Fehlerabschnitt wiederhergestellt wird.

## Revendications

1. Système de transmission d'énergie CC (1) comprenant :
une voie de transmission d'énergie CC (2) formée par la divergence en une pluralité de voies ou la convergence d'une pluralité de voies ;
de multiples commutateurs (6) installés de manière à diviser la voie de transmission d'énergie CC en sections individuelles ;
une unité de détection (71) détectant une présence d'un défaut ; et
une unité de commande (72) commandant une ouverture et une fermeture de chaque commutateur sur la base d'un résultat de détection par l'unité de détection,
dans lequel l'unité de commande est apte à :
amener certains des commutateurs à réaliser une action d'ouverture de manière à déconnecter la section, où un défaut survient, depuis la voie de transmission d'énergie CC lorsque l'unité de détection détecte une survenance du défaut ;
amener un seul des commutateurs ouverts en raison de la survenance du défaut à réaliser une action de fermeture après l'action d'ouverture ;
amener le commutateur fermé à réaliser une action de réouverture lorsque l'unité de détection détecte que le défaut survient toujours après l'action de fermeture du commutateur ; et
remettre tous les commutateurs ouverts pour déconnecter la section de défaut depuis la voie de transmission d'énergie CC dans l'état fermé lorsque l'unité de détection ne détecte pas que le défaut survient toujours après l'action de fermeture du commutateur, en réalisant de ce fait une action de rétablissement de la section de défaut.

2. Système de transmission d'énergie CC selon la revendication 1, dans lequel :
au moins l'un parmi les commutateurs inclut un disjoncteur semiconducteur (63) ayant une capacité d'auto-extinction et disposé de manière à être capable d'arrêter tout seul la section de défaut ; et
l'unité de commande amène le disjoncteur semiconducteur du commutateur à réaliser l'action de fermeture et l'action de réouverture.

3. Système de transmission d'énergie CC selon la revendication 2, dans lequel :
au moins l'un parmi les commutateurs comprend un disjoncteur mécanique (62) avec un contact métallique parallèle au disjoncteur semiconducteur ; et
l'unité de commande ferme en outre le disjoncteur mécanique pour l'action de rétablissement lorsque l'unité de détection ne détecte pas que le défaut survient toujours.

4. Système de transmission d'énergie CC selon l'une quelconque des revendications 1 à 3, dans lequel l'unité de commande comprend :
un relais de protection (7) comprenant l'unité de détection, et amenant le commutateur à réaliser l'action d'ouverture et l'action de réouverture sur la base d'une détection de la présence du défaut ; et
un serveur central (9) instruisant au relais de protection de réaliser l'action de fermeture et l'action de rétablissement en réponse à une présence ou une absence d'une commande par le relais de protection pour l'action d'ouverture et l'action de réouverture.

5. Système de transmission d'énergie CC selon la revendication 4, dans lequel le serveur central délivre une instruction pour l'action de rétablissement au relais de protection lorsqu'aucun signal indiquant un achèvement d'ouverture n'est délivré depuis le commutateur après qu'une instruction pour l'action de fermeture est donnée.

6. Système de transmission d'énergie CC selon l'une quelconque des revendications 1 à 5, comprenant en outre un convertisseur (4) installé au niveau d'une extrémité terminale de la voie de transmission d'énergie CC, et convertissant réciproquement CA et CC, dans lequel :
la section incluant l'extrémité terminale de la voie de transmission d'énergie CC est divisée par un disjoncteur CA prévu entre un système CA et le convertisseur ; et
au moins l'un parmi les commutateurs à commander par l'unité de commande est le disjoncteur CA.

7. Système de transmission d'énergie CC selon la revendication 2 ou 3 ou l'une quelconque des revendications 4 et 5 dépendant de la revendication 2, comprenant en outre un convertisseur (4) installé au niveau d'une extrémité terminale de la voie de transmission d'énergie CC, et convertissant réciproquement CA et CC, dans lequel :
la section incluant l'extrémité terminale de la voie de transmission d'énergie CC est divisée par un disjoncteur CC prévu entre le convertisseur et une ligne de transmission d'énergie ;
au moins l'un parmi les commutateurs à commander par l'unité de commande est le disjoncteur CC ; et
un amortisseur de surtension (66) connecté en parallèle au disjoncteur semiconducteur (63).

8. Système de transmission d'énergie CC selon l'une quelconque des revendications 1 à 7, dans lequel l'unité de détection détecte une survenance du défaut et une continuation de celui-ci sur la base d'un courant circulant dans la section, d'un changement du courant, d'un changement de tension, ou d'une combinaison de ceux-ci.

9. Système de transmission d'énergie CC selon la revendication 8, dans lequel l'unité de détection stocke, à l'avance, un seuil de courant de détection de survenance de défaut supérieur à une valeur de courant CC lorsqu'aucun défaut ne survient dans la section, et un seuil de courant pour confirmer la continuation du défaut ou une fin de celui-ci et supérieur à une valeur de courant de chargement dans la section mais inférieur à la valeur de courant CC lorsqu'aucun défaut ne survient dans la section.

10. Système de transmission d'énergie CC selon la revendication 8 ou 9, dans lequel l'unité de détection stocke, à l'avance, un seuil pour un changement de courant qui est progressif par rapport à un changement de courant lorsque le défaut survient dans la section, mais est plus vif que le changement de courant lorsque le courant de chargement circule dans la section.

11. Serveur central (9) commandant une rupture de courant et une circulation de courant d'une voie de transmission d'énergie CC (2) formée par la divergence en une pluralité de voies ou la convergence d'une pluralité de voies, dans lequel le serveur central :
est connecté à, via une voie de transmission de signal, un relais de protection (7) commandant chaque commutateur (6) installé de manière à diviser la voie de transmission d'énergie CC en sections individuelles ;
est configuré pour délivrer, au relais de protection, un signal pour amener un seul des commutateurs ouverts en raison d'une survenance d'un défaut à réaliser une action de fermeture, les commutateurs ouverts sont ouverts de manière à déconnecter la section, où le défaut survient, depuis la voie de transmission d'énergie CC après que le relais de protection détecte une présence du défaut ; et
est configuré pour délivrer, au relais de protection, un signal pour fermer tous les commutateurs ouverts pour déconnecter la section de défaut depuis la voie de transmission d'énergie CC lorsque le relais de protection ne détecte pas que le défaut survient toujours après que l'un parmi les commutateurs est fermé, en réalisant de ce fait une action de rétablissement de la section de défaut.

12. Procédé de rétablissement après un défaut d'une voie de transmission d'énergie CC (2) formée par la divergence en une pluralité de voies ou la convergence d'une pluralité de voies, le procédé comprenant :
la détection d'une présence d'un défaut ;
l'ouverture de commutateurs (6) de manière à déconnecter une section, où le défaut survient, depuis la voie de transmission d'énergie CC lors de la détection de la présence du défaut ;
la fermeture d'un seul des commutateurs ouverts en raison de la survenance du défaut après l'ouverture ;
la réouverture du commutateur fermé lors de la détection que le défaut survient toujours après que le commutateur est fermé ; et
la remise de tous les commutateurs ouverts pour déconnecter la section de défaut depuis la voie de transmission d'énergie CC dans l'état fermé lorsqu'il n'est pas détecté que le défaut survient toujours après que le commutateur est fermé, en rétablissant de ce fait la section de défaut.
